# EUROPÄISCHE PATENTSCHRIFT

(11) **EP 3 184 774 B1**
(45) Veröffentlichungstag und Bekanntmachung des Hinweises auf die Patenterteilung: **28.11.2018**
(21) Anmeldenummer: 16200892.4
(22) Anmeldetag: 28.11.2016
(51) Int. Cl.: F01N 9/00, F01N 13/10, F01N 13/14, F01N 3/08, F01N 3/021, F02D 13/02, F02D 41/02, F02D 41/06, F02B 37/00

(54) **VERFAHREN UND VORRICHTUNG ZUM VERBESSERN EINES ABGASVERHALTENS EINES VERBRENNUNGSMOTORS**
METHOD AND APPARATUS FOR IMPROVING AN EXHAUST GAS BEHAVIOUR OF A COMBUSTION ENGINE
PROCÉDÉ ET DISPOSITIF D'AMÉLIORATION DU COMPORTEMENT DE GAZ D'ÉCHAPPEMENT D'UN MOTEUR À COMBUSTION INTERNE

(30) Priorität: 24.12.2015 DE 102015016977
(43) Veröffentlichungstag der Anmeldung: 28.06.2017
(73) Patentinhaber: AUDI AG, 85045 Ingolstadt (DE)
(72) Erfinder: Tapp, Christoph, 74177 Bad Friedrichshall (DE); Rausch, Torsten, 74226 Nordheim (DE)

(56) Entgegenhaltungen:
- EP-A2- 1 754 870
- DE-A1-102005 055 996
- DE-A1-102011 018 281
- DE-A1-102014 203 015
- DE-U1-202015 101 104

## Beschreibung

Die vorliegende Erfindung betrifft ein Verfahren zur Schadstoffreduktion bei einem Verbrennungsmotor sowie einen Verbrennungsmotor.

Verbrennungsmotoren erzeugen Abgase, die aufgrund ihrer umweltgefährdenden Eigenschaften in der Regel mittels eines Abgasnachbehandlungssystems nachbehandelt, d. h. bspw. weiter oxidiert werden, um deren Umweltgefährdungspotential zu verringern. Da Abgasnachbehandlungssysteme in der Regel eine hohe Betriebstemperatur voraussetzen, gelingt die Nachbehandlung der Abgase während einer Kaltstartphase eines jeweiligen Motors in der Regel nur bedingt, so dass Bedarf für eine schnelle Erwärmung eines jeweiligen Abgasnachbehandlungssystems bei einem Kaltstart besteht.

In der Druckschrift GB 2428739 A wird ein Abgaskrümmer eines Verbrennungsmotors eines Kraftfahrzeugs mit zwei Abgaswegen offenbart, wobei einer der Abgaswege eine Kühlung zum Abkühlen von Abgasen aufweist.

Die deutsche Druckschrift DE 10 2011 018281 A1 offenbart einen Zylinderkopf einer Brennkraftmaschine mit isolationsbeschichteten Abgaskanälen zur Erhöhung einer im Turbolader bzw. Katalysator nutzbaren Abgasenthalpie.

Ein Abgaskrümmer eines Kraftfahrzeugs mit mehreren Auslasskanälen, die paarweise miteinander verbunden sind, um einen oder mehrere Turbolader effizient anzusprechen, ist in der deutschen Druckschrift DE 10 2014 104402 A1 offenbart.

Aus der DE 20 2015 101 104 U1 ist ein Abgastrakt einer Brennkraftmaschine eines Kraftfahrzeugs mit mehreren Turboladern bekannt, wobei ein Teil des Abgastrakts mit mindestens einer ersten Turbine eines ersten Turboladers eine innenliegende isolierende Metallstruktur aufweist, und ein Teil des Abgastrakts mit mindestens einer zweiten Turbine eines zweiten Turboladers keine wärmeisolierende Struktur aufweist.

Die DE 10 2014 203 015 A1 offenbart eine Abgasführung zum Führen eines Abgasstroms eines Verbrennungsmotors, mit einem ersten Fluidpfad zum Führen eines ersten Teilstroms des Abgasstroms, einem zweiten Fluidpfad zum Führen eines zweiten Teilstroms des Abgasstroms, einem dem ersten Fluidpfad vorgeschalteten ersten Auslassventil des Verbrennungsmotors, einem dem zweiten Fluidpfad vorgeschalteten zweiten Auslassventil und einer zumindest einem der Fluidpfade vorgeschalteten Steuervorrichtung, mittels der zumindest einer der Teilströme des Abgasstroms steuerbar ist.

Vor diesem Hintergrund wird ein Verfahren zur Schadstoffreduktion bei einem Verbrennungsmotor offenbart, bei dem mittels mindestens eines Zylinders des Verbrennungsmotors mit mindestens einem ersten Auslassventil und einem zweiten Auslassventil erzeugte Abgase in Abhängigkeit einer vorgegebenen Bedingung ausschließlich mittels des mindestens einen ersten Auslassventils über einen dem mindestens einen ersten Auslassventil zugeordneten ersten Abgaskanal, der zumindest teilweise eine thermisch isolierende Schicht aufweist, einem Abgasnachbehandlungssystem zugeführt werden, und wobei die thermisch isolierende Schicht derart gewählt wird, dass mittels der Abgase ein gegenüber einem mittels eines dem zweiten Auslassventil zugeordneten zweiten Abgaskanals zu übertragenden Wärmeeintrag erhöhter Wärmeeintrag in das Abgasnachbehandlungssystem erfolgt.

Das erfindungsgemäße Verfahren dient insbesondere zum Erhöhen eines Wärmeeintrags in ein Abgasnachbehandlungssystem eines Verbrennungsmotors, indem von dem Verbrennungsmotor erzeugte Abgase insbesondere während einer Kaltstartphase bzw. in Abhängigkeit einer vorgegebenen Bedingung, wie bspw. einer Kühlmitteltemperatur, ausschließlich über einen Abgaskanal geführt werden, der derart beschichtet bzw. thermisch isoliert ist, dass ein Wärmeeintrag durch die Abgase des Verbrennungsmotors in den Abgaskanal vermieden bzw. gegenüber einem Abgaskanal ohne Beschichtung reduziert und, dadurch bedingt, ein Wärmeeintrag durch die Abgase in das Abgasnachbehandlungssystem erhöht wird.

Um von einem jeweiligen Verbrennungsmotor zu erzeugende Abgase in Abhängigkeit einer vorgegebenen Bedingung, d. h. selektiv bzw. dynamisch in Abhängigkeit einer vorgegebenen Bedingung, ausschließlich über einen jeweiligen beschichteten bzw. thermisch isolierten Abgaskanal zu leiten und einen Wärmeeintrag in ein jeweiliges Abgasnachbehandlungssystem dadurch zu erhöhen, ist erfindungsgemäß vorgesehen, dass jeweilige Auslassventile eines jeweiligen Zylinders des Verbrennungsmotors in Abhängigkeit der vorgegebenen Bedingung aktiviert bzw. deaktiviert werden. Dies bedeutet, dass insbesondere für den Fall, dass dem Abgasnachbehandlungssystem Wärmeenergie zugeführt werden soll, um bspw. eine Kaltstartphase zu verkürzen oder ein Freibrennen des Abgasnachbehandlungssystems zu induzieren, jeweilige Abgase ausschließlich über den beschichteten Abgaskanal geleitet werden, indem ausschließlich ein jeweiliges dem beschichteten Abgaskanal zugeordnetes Auslassventil aktiviert wird.

Um eine Temperatur in jeweiligen Bauteilen des Verbrennungsmotors, wie bspw. in dem Abgasnachbehandlungssystem, zu senken, kann vorgesehen sein, dass in Abhängigkeit einer weiteren vorgegebenen Bedingung, wie bspw. einer aktuellen Temperatur des Abgasnachbehandlungssystems, ein zweites Auslassventil eines jeweiligen Zylinders des Verbrennungsmotors aktiviert wird, so dass von dem Zylinder zu erzeugende Abgase zumindest teilweise mittels des zweiten Auslassventils abgeführt werden, wobei das zweite Auslassventil einem zweiten Abgaskanal zugeordnet ist, der keine thermische Isolation bzw. keine entsprechende Beschichtung aufweist. Dies bedeutet, dass durch den dem zweiten Auslassventil zugeordneten zweiten Abgaskanal Wärmeenergie aus jeweiligen Abgasen aufgenommen und, dadurch bedingt, die Abgase abgekühlt werden, so dass ein Wärmeeintrag in weitere Komponenten des Verbrennungsmotors durch die Abgase gegenüber einem Transport mittels eines thermisch beschichteten bzw. isolierten Abgaskanals reduziert wird.

Unter einer thermisch isolierenden Schicht ist im Kontext der vorgestellten Erfindung jede Schicht zu verstehen, die einen Übergang von Wärme aus jeweiligen Abgasen in ein einen Abgaskanal bildendes Bauelement oder eine Umgebung des Abgaskanals reduziert und eine Wärmenergie in den Abgasen möglichst konstant hält bzw. die Abgase möglichst wenig abkühlt.

Im Folgenden werden die Begriffe "Abgaskanat" und "einen bzw. den Abgaskanal bildendes Bauelement" synonym verwendet.

Eine thermisch isolierende Schicht kann in einem inneren, d. h. in einem mit jeweiligen Abgasen in Kontakt tretenden Teil eines Abgaskanals angeordnet sein. Die erfindungsgemäß vorgesehene thermisch isolierende Schicht kann demnach bspw. reflektierend ausgestaltet sein, so dass ein Wärmeeintrag in den Abgaskanal bzw. in das den Abgaskanal bildende Bauelement vermieden bzw. reduziert wird. Allerdings kann eine thermisch isolierende Schicht auch an einem äußeren, d. h. an einem mit einer Umgebung des Abgaskanals in Kontakt stehenden Teil des Abgaskanals angeordnet sein. Weiterhin kann die erfindungsgemäß vorgesehene thermisch isolierende Schicht derart ausgestaltet sein, dass ein Wärmeübergang von dem Abgaskanal bzw. dem den Abgaskanal bildenden Bauelement in eine Umgebung reduziert bzw. verhindert wird, so dass Wärmeenergie in dem Abgaskanal und, dadurch bedingt, in jeweiligen Abgasen gehalten wird.

Um Wärmeenergie in einem jeweiligen Abgaskanal zu halten und jeweilige Abgase am Abkühlen zu hindern, kann der Abgaskanal bspw. mit isolierenden Gewebeschichten umwickelt werden.

Um Wärmeenergie in jeweiligen Abgasen zu halten ohne einen jeweiligen Abgaskanal bzw. ein den jeweiligen Abgaskanal bildendes Bauelement zu erwärmen, kann der Abgaskanal bzw. das entsprechende Bauteil bspw. in seinem Inneren mit einem Lack bzw. einer Legierung beschichtet oder entsprechend oberflächenbehandelt, d. h. bspw. poliert werden. Insbesondere ist vorgesehen, dass der Abgaskanal bzw. das entsprechende Bauteil derart behandelt wird, dass dieser in seinem Inneren eine reflektierende Oberfläche aufweist, die von jeweiligen Abgasen abgestrahlte Wärmestrahlen zurück in die Abgase reflektiert.

In einer weiteren möglichen Ausgestaltung des vorgestellten Verfahrens ist vorgesehen, dass in Abhängigkeit einer weiteren vorgegebenen Bedingung die von dem mindestens einen Zylinder erzeugten Abgase zumindest teilweise mittels des zweiten Auslassventils über den zweiten Abgaskanal aus dem mindestens einen Zylinder abgeleitet werden.

Um ein Erwärmen einer jeweiligen Abgasnachbehandlungsanlage über ein vorgegebenes Temperaturniveau hinaus zu vermeiden, ist in Ausgestaltung vorgesehen, dass in Abhängigkeit einer weiteren vorgegebenen Bedingung, wie bspw. in Abhängigkeit aktueller Abgaswerte oder eines seit einem Start eines jeweiligen Verbrennungsmotors vergangenen Zeitbereichs, ein zweites Auslassventil eines jeweiligen Zylinders des Verbrennungsmotors aktiviert wird, so dass von dem Zylinder erzeugte Abgase zumindest teilweise mittels eines dem zweiten Auslassventil zugeordneten Abgaskanals, d. h. eines zweiten Abgaskanals, abgeführt werden und ein Wärmeeintrag in das Abgasnachbehandlungssystem reduziert wird, da der dem zweiten Auslassventil zugeordnete Abgaskanal keine thermische Isolierung bzw. Beschichtung aufweist und, dadurch bedingt, dem Abgas mehr Wärme entzieht als der dem mindestens einen ersten Auslassventil zugeordnete, d. h. der erste, Abgaskanal.

Es ist denkbar, dass mittels eines dem mindestens einen ersten Auslassventil und/oder mittels eines weiteren dem zweiten Auslassventil zugeordneten Abgaskanals eine Anzahl Turbolader mit Abgas versorgt und, dadurch bedingt, angetrieben wird. Insbesondere durch Verwendung von mittels des dem mindestens einen ersten Auslassventil zugeordneten Abgaskanals abgeführten Abgasen kann ein Turbolader besonders effizient angetrieben werden, da der dem mindestens einen ersten Auslassventil zugeordnete Abgaskanal Abgase mit einem hohen Wärmeeintrag, d. h. Abgase mit einer hohen Enthalpie, leitet, wodurch ein Turbolader besonders effizient betrieben werden kann.

Weiterhin wird ein Turbolader durch Abgase mit einer hohen Enthalpie bzw. einem hohen Wärmeeintrag besonders gleichmäßig erwärmt, so dass thermische Belastungen und dadurch bedingte Materialermüdungen reduziert werden.

In einer weiteren möglichen Ausgestaltung des vorgestellten Verfahrens ist vorgesehen, dass die vorgegebene Bedingung, in Abhängigkeit derer die Abgase ausschließlich mittels des ersten Auslassventils über den ersten Abgaskanal dem Abgasnachbehandlungssystem zugeführt werden, in Abhängigkeit eines aktuellen Betriebszustands einer Ventilsteuerung zur Regelung einer Bewegung von mindestens dem ersten Auslassventil und dem zweiten Auslassventil gewählt wird.

Durch Kombination des vorgestellten Verfahrens mit einer Ventilsteuerung zur Regelung des mindestens einen ersten Auslassventils und des zweiten Auslassventils kann eine Zufuhr von Wärmeenergie in ein Abgasnachbehandlungssystem mittels des erfindungsgemäß vorgesehenen thermisch isolierten bzw. beschichteten Abgaskanals in Abhängigkeit einer Steuerungslogik der Ventilsteuerung erfolgen. Dies bedeutet, dass der Wärmeeintrag in das Abgasnachbehandlungssystem bspw. dann besonders hoch ist, wenn durch die Ventilsteuerung lediglich das mindestens eine erste Auslassventil aktiviert wird. Insbesondere bei einer Ventilsteuerung zum Regeln von registeraufgeladenen Verbrennungsmotoren mit einer Vielzahl von Turboladern kann der erhöhte Wärmeeintrag in das Abgasnachbehandlungssystem an einen Betrieb mit lediglich einem Turbolader, bspw. bei niedrigen Drehzahlen, gekoppelt werden.

In dem vorgestellten Verfahren ist vorgesehen, dass die vorgegebene Bedingung, in Abhängigkeit derer die Abgase ausschließlich mittels des ersten Auslassventils über den ersten Abgaskanal dem Abgasnachbehandlungssystem zugeführt werden, in Abhängigkeit einer Kühlmitteltemperatur des Verbrennungsmotors gewählt wird.

In einer weiteren möglichen Ausgestaltung des vorgestellten Verfahrens ist vorgesehen, dass der erste Abgaskanal derart ausgestaltet wird, dass der Wärmeeintrag aus dem mindestens einen Zylinder in das Abgasnachbehandlungssystem maximiert wird.

Durch Verwendung eines Abgaskanals, der bspw. eine direkte Verbindung von einem jeweiligen Zylinder eines Verbrennungsmotors zu einem Abgasnachbehandlungssystem bereitstellt, kann eine Abkühlung von mittels des Zylinders erzeugter Abgase auf ihrem Weg zu dem Abgasnachbehandlungssystem minimiert und eine Erwärmung des Abgasnachbehandlungssystems entsprechend maximiert werden. Während Abgaskanäle in der Regel derart geformt sind, dass jeweilige Abgase, bspw. durch Verwendung von Windungen schnell abkühlen, eignet sich eine direkte Verbindung in Form bspw. einer Gerade, zum effizienten Überführen von Wärmeenergie in das Abgasnachbehandlungssystem.

Ferner betrifft die vorliegende Erfindung einen Verbrennungsmotor mit mindestens einem Zylinder mit mindestens einem ersten Auslassventil und einem zweiten Auslassventil, wobei der Verbrennungsmotor dazu konfiguriert ist, mittels des mindestens einen Zylinders zu erzeugende Abgase in Abhängigkeit einer vorzugebenden Bedingung, die in Abhängigkeit einer Kühlmitteltemperatur des Verbrennungsmotors gewählt ist, ausschließlich mittels des ersten Auslassventils über einen dem ersten Auslassventil zugeordneten ersten Abgaskanal, der zumindest teilweise eine thermisch isolierende Schicht aufweist, einem Abgasnachbehändlungssystem zuzuführen, und wobei die thermisch isolierende Schicht derart ausgestaltet ist, dass mittels der Abgase ein gegenüber einem mittels eines dem zweiten Auslassventil zugeordneten zweiten Abgaskanals, der keine isolierende Schicht aufweist, zu übertragenden Wärmeeintrag erhöhter Wärmeeintrag in das Abgasnachbehandlungssystem zu übertragen ist.

Der vorgestellte Verbrennungsmotor dient insbesondere zur Durchführung des vorgestellten Verfahrens.

Der vorgestellte Verbrennungsmotor umfasst ein Steuergerät, das dazu konfiguriert ist, das mindestens eine erste Auslassventil und das zweite Auslassventil derart zu steuern, dass in Abhängigkeit der vorzugebenden Bedingung lediglich das mindestens eine erste Auslassventil derart zu öffnen ist, dass von dem mindestens einen Zylinder zu erzeugende Abgase über den dem mindestens einen ersten Auslassventil zugeordneten Abgaskanal, d. h. den ersten Abgaskanal, der zumindest teilweise die thermisch isolierende Schicht aufweist, dem Abgasnachbehandlungssystem zuzuführen sind.

Mittels eines Steuergeräts, das zum Aktivieren des mindestens einen ersten Auslassventils und des zweiten Auslassventils konfiguriert ist, kann ein Wärmeeintrag in das Abgasnachbeharidlungssystem reguliert werden, in dem das mindestens eine erste Auslassventil entsprechend aktiviert bzw. deaktiviert wird.

In einer weiteren möglichen Ausgestaltung des vorgestellten Verbrennungsmotors ist vorgesehen, dass der Verbrennungsmotor mindestens einen ersten und einen zweiten Turbolader umfasst, wobei das Steuergerät dazu konfiguriert ist, das mindestens eine Auslassventil derart anzusteuern, dass während einer Kaltstartphase des Verbrennungsmotors die von dem mindestens einen Zylinder erzeugten Abgase mittels des dem mindestens einen ersten Auslassventil zugeordneten Abgaskanals lediglich dem ersten Turbolader und anschließend dem Abgasnachbehandlungssystem zuzuführen sind.

Insbesondere ist vorgesehen, dass der vorgestellte Verbrennungsmotor ein Dieselmotor ist.

Weitere Vorteile und Ausgestaltungen ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.

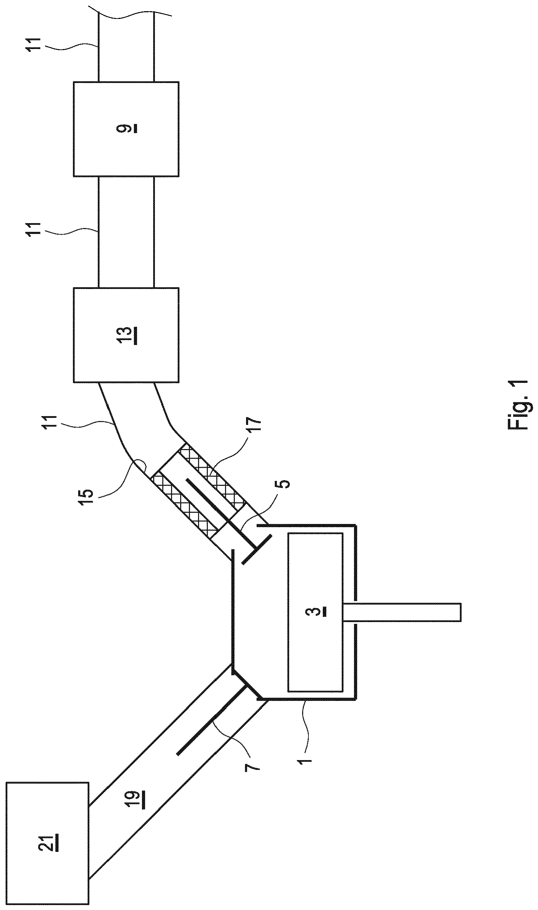

Figur 1 zeigt eine mögliche Ausgestaltung des erfindungsgemäßen Verbrennungsmotors.

In Figur 1 ist ein Zylinder 1 eines Dieselmotors dargestellt. In dem Zylinder 1 sind ein Kolben 3 und ein erstes Auslassventil 5 sowie ein zweites Auslassventil 7 angeordnet. Um bei einem Betrieb des Dieselmotors in dem Zylinder 1 erzeugte Abgase möglichst schnell und effizient einer Abgasnachbehandlung zu unterziehen, muss ein Abgasnachbehandlungssystem 9 nach einem Start des Dieselmotors möglichst schnell auf Betriebstemperatur gebracht werden. Dazu ist vorgesehen, dass ein Wärmeeintrag durch von dem Zylinder 1 erzeugte Abgase in das Abgasnachbehandlungssystem 9 maximiert wird, indem die von dem Zylinder 1 erzeugten Abgase solange ausschließlich über das erste Auslassventil 5 und einen dem ersten Auslassventil 5 zugeordneten Abgaskanal 11 zunächst zu einem Turbolader 13 und anschließend zu dem Abgasnachbehandlungssystem 9 geleitet werden bis die Temperatur in dem Abgasnachbehandlungssystem 9 eine gewünschte vorgegebene Temperatur erreicht hat.

Der Abgaskanal 11 weist in seinem Innern, d. h. auf einer Innenseite 15, eine thermische Isolationsschicht 17 auf, die einen Übergang von Wärmeenergie aus von dem Zylinder 1 erzeugtem Abgas in den Abgaskanal 11, d. h. ein den Abgaskanai 11 bildendes Material, verhindert bzw. minimiert, so dass in dem Abgas enthaltene Wärmeenergie in dem Abgas gespeichert bleibt und zum Erwärmen des Abgasnachbehandlungssystems 9 verwendet werden kann. Die Isolationsschicht 17 kann bspw. als Emailschicht ausgestaltet sein, die sich durch eine extrem schlechte Wärmeleitung auszeichnet. Eine mögliche Art von Emailschicht ist unter der Bezeichnung NemaCoat™ der Firma NEMAK bekannt. Selbstverständlich ist auch denkbar, dass die Isolationsschicht 17 keramische Einsätze, sogenannte Portliner umfasst.

Sobald das Abgasnachbehandlungssystem 9 auf Betriebstemperatur gebracht wurde, kann das zweite Auslassventil 7 aktiviert werden, so dass auch ein einem zweiten Abgaskanal 19 zugeordneter Turbolader 21 betrieben werden kann und der Dieselmotor entsprechend effizient und leistungsstark arbeitet. Entsprechend ist die Erwärmungsphase, während der ein Eintrag von Wärmeenergie in das Abgasnachbehandlungssystem 9 erfolgt, an einen Betriebszustand einer Steuerung des ersten Auslassventils 5 und des zweiten Auslassventils 7, die wiederum in Abhängigkeit einer aktuellen Kühlmitteltemperatur des Dieselmotors geregelt werden kann, gekoppelt.

## Patentansprüche

1. Verfahren zur Schadstoffreduktion bei einem Verbrennungsmotor, bei dem mittels mindestens eines Zylinders (1) des Verbrennungsmotors mit mindestens einem ersten Auslassventil (5) und einem zweiten Auslassventil (7), wobei ein dem zweiten Auslassventil (7) zugeordneter zweiter Abgaskanal (19) keine isolierende Schicht aufweist, erzeugte Abgase in Abhängigkeit einer vorgegebenen Bedingung ausschließlich mittels des mindestens einen ersten Auslassventils (5) über einen dem mindestens einen ersten Auslassventil (5) zugeordneten ersten Abgaskanal (11), der zumindest teilweise eine thermisch isolierende Schicht (17) aufweist, die einen Übergang von Wärme aus jeweiligen Abgasen in ein den Abgaskanal (11) bildendes Bauelement oder eine Umgebung des Abgaskanals (11) reduziert, einem Abgasnachbehandlungssystem (9) zugeführt werden, **dadurch gekennzeichnet, dass** die vorgegebene Bedingung, in Abhängigkeit derer die Abgase ausschließlich mittels des ersten Auslassventils (5) über den ersten Abgaskanal (11) dem Abgasnachbehandlungssystem (9) zugeführt werden, in Abhängigkeit einer Kühlmitteltemperatur des Verbrennungsmotors gewählt wird.

2. Verfahren nach Anspruch 1, bei dem in Abhängigkeit einer weiteren vorgegebenen Bedingung die von dem mindestens einen Zylinder (1) erzeugten Abgase zumindest teilweise mittels des zweiten Auslassventils (7) über den zweiten Abgaskanal (19) aus dem mindestens einen Zylinder (1) abgeleitet werden, wobei die weitere vorgegebene Bedingung in Abhängigkeit aktueller Abgaswerte oder eines seit einem Start eines jeweiligen Verbrennungsmotors vergangenen Zeitbereichs gewählt wird.

3. Verfahren nach einem der voranstehenden Ansprüche, bei dem der erste Abgaskanal (11) eine direkte Verbindung von dem mindestens einen Zylinder (1) zu dem Abgasnachbehandlungssystem (9) in Form einer Gerade bereitstellt.

4. Verfahren nach einem der voranstehenden Ansprüche, bei dem der erste Abgaskanal (11) auf seiner Innenseite (15) eine reflektierende Oberfläche aufweist.

5. Verfahren nach einem der voranstehenden Ansprüche, bei dem der erste Abgaskanal (11) auf seiner Innenseite (15) mit einem Lack oder einer Legierung beschichtet oder poliert ist.

6. Verbrennungsmotor mit mindestens einem Zylinder (1) mit mindestens einem ersten Auslassventil (5) und einem zweiten Auslassventil (7), wobei ein dem zweiten Auslassventil (7) zugeordneter zweiter Abgaskanal (19) keine isolierende Schicht aufweist, und wobei der Verbrennungsmotor dazu konfiguriert ist, mittels des mindestens einen Zylinders (1) zu erzeugende Abgase in Abhängigkeit einer vorzugebenden Bedingung ausschließlich mittels des ersten Auslassventils (5) über einen dem ersten Auslassventil (5) zugeordneten ersten Abgaskanal (11), der zumindest teilweise eine thermisch isolierende Schicht (17) aufweist, die einen Übergang von Wärme aus jeweiligen Abgasen in ein den ersten Abgaskanal (11) bildendes Bauelement oder eine Umgebung des ersten Abgaskanals (11) reduziert, einem Abgasnachbehandlungssystem (9) zuzuführen, und wobei der Verbrennungsmotor ein Steuergerät umfasst, das dazu konfiguriert ist, das mindestens eine erste Auslassventil (5) und das zweite Auslassventil (7) derart zu steuern, dass in Abhängigkeit der vorzugebenden Bedingung lediglich das mindestens eine erste Auslassventil (5) derart zu öffnen ist, dass von dem mindestens einen Zylinder (1) zu erzeugende Abgase über den dem mindestens einen ersten Auslassventil (5) zugeordneten ersten Abgaskanal (11), der zumindest teilweise die thermisch isolierende Schicht (17) aufweist, dem Abgasnachbehandlungssystem (9) zugeführt werden, **dadurch gekennzeichnet, dass** die vorgegebene Bedingung, in Abhängigkeit derer die Abgase ausschließlich mittels des ersten Auslassventils (5) über den ersten Abgaskanal (11) dem Abgasnachbehandlungssystem (9) zuzuführen sind, in Abhängigkeit einer Kühlmitteltemperatur des Verbrennungsmotors gewählt ist.

7. Verbrennungsmotor nach Anspruch 6, wobei der Verbrennungsmotor mindestens einen ersten Turbolader (13) und einen zweiten Turbolader (21) umfasst, und wobei das Steuergerät dazu konfiguriert ist, das mindestens eine erste Auslassventil (5) derart anzusteuern, dass während einer Kaltstartphase des Verbrennungsmotors die von dem mindestens einen Zylinder (1) zu erzeugenden Abgase mittels des dem mindestens einen ersten Auslassventil (5) zugeordneten ersten Abgaskanals (11) ausschließlich dem ersten Turbolader (13) und anschließend dem Abgasnachbehandlungssystem (9) zugeführt werden.

8. Verbrennungsmotor nach Anspruch 6 oder 7, wobei eine thermisch isolierende Schicht (17) auf einer inneren Oberfläche (15) des ersten Abgaskanals (11) aufgebracht ist.

9. Verbrennungsmotor nach Anspruch 8, bei dem die thermisch isolierende Schicht (17) als Emailschicht ausgestaltet ist.

10. Verbrennungsmotor nach Anspruch 6 oder 7, wobei eine thermisch isolierende Schicht (17) auf einer äußeren Oberfläche des ersten Abgaskanals (11) aufgebracht ist.

11. Verbrennungsmotor nach Anspruch 10, bei dem der erste Abgaskanal (11) mit isolierenden Gewebeschichten umwickelt ist.

12. Verbrennungsmotor nach einem der Ansprüche 6 bis 11, wobei der Verbrennungsmotor ein Dieselmotor ist.

## Claims

1. Method for reducing pollutants in a combustion engine, wherein by means of at least one cylinder (1) of the combustion engine with at least one first outlet valve (5) and a second outlet valve (7), wherein a second exhaust channel (19) assigned to the second outlet valve (7) does not have an insulating layer, produced exhaust gases are fed to an exhaust gas aftertreatment system (9) as a function of a predefined condition solely by means of the at least one first outlet valve (5) via a first exhaust channel (11) assigned to the at least one first outlet valve (5), which has at least partly a thermal insulating layer (17) for reducing the transmission of heat from the respective exhaust gases to a component forming the exhaust channel (11) or an area surrounding the exhaust channel (11), **characterised in that** the predefined condition, as a function of which the exhaust gases are fed to the exhaust gas aftertreatment system (9) solely by means of the first outlet valve (5) via the first exhaust channel (11), is selected as a function of a coolant temperature of the combustion engine.

2. Method according to claim 1, wherein as a function of an additional predefined condition the exhaust gases produced by the at least one cylinder (1) are diverted at least partly by means of the second outlet valve (7) via the second exhaust channel (19) from the at least one cylinder (1), wherein the additional predefined condition is selected as a function of the current exhaust values or a time period that has passed since a start-up of a respective combustion engine.

3. Method according to any of the preceding claims, wherein the first exhaust channel (11) provides a direct connection from the at least one cylinder (1) to the exhaust gas aftertreatment system (9) in the form of a straight line.

4. Method according to any of the preceding claims, wherein the first exhaust channel (11) has a reflective surface on its inner side (15).

5. Method according to any of the preceding claims, wherein the first exhaust channel (11) is coated or polished on its inner side (15) with a paint or an alloy.

6. Combustion engine having at least one cylinder (1) with at least one first outlet valve (5) and a second outlet valve (7), wherein a second exhaust channel (19) assigned to the second outlet valve (7) does not have an insulating layer, and wherein the combustion engine is configured to supply the exhaust gases to be produced by means of the at least one cylinder (1) to an exhaust gas aftertreatment system (9) as a function of a predefined condition solely by means of the first outlet valve (5) via a first exhaust channel (11) assigned to the first outlet valve (5), which exhaust channel has at least partly a thermal insulating layer (17) which reduces a transmission of heat from the respective exhaust gases into a component forming the first exhaust channel (11) or an area surrounding the first exhaust channel (11), and wherein the combustion engine comprises a control device which is configured to control the at least one first outlet valve (5) and the second outlet valve (7) such that as a function of the predefined condition only the at least one first outlet valve (5) is opened such that exhaust gases to be produced from the at least one cylinder (1) are fed to the exhaust gas aftertreatment system (9) via the first exhaust channel (11) assigned to the at least one first outlet valve (5), which exhaust channel has at least partly the thermal insulating layer (17), **characterised in that** the predefined condition, as a function of which the exhaust gases are fed to the exhaust gas aftertreatment system (9) solely by means of the first outlet valve (5) via the first exhaust channel (11), is selected as a function of a coolant temperature of the combustion engine.

7. Combustion engine according to claim 6, wherein the combustion engine comprises at least one first turbocharger (13) and a second turbocharger (21), and wherein the control device is configured to control the at least one first outlet valve (5) such that during a cold-start phase of the combustion engine the exhaust gases to be produced by the at least one cylinder (1) are supplied by means of the first exhaust channel (11) assigned to the at least one first outlet valve (5) solely to the first turbocharger (13) and afterwards to the exhaust gas aftertreatment system (9).

8. Combustion engine according to claim 6 or 7, wherein a thermal insulating layer (17) is applied to an inner surface (15) of the first exhaust channel (11).

9. Combustion engine according to claim 8, wherein the thermal insulating layer (17) is in the form of an enamel layer.

10. Combustion engine according to claim 6 or 7, wherein a thermal insulating layer (17) is applied onto an external surface of the first exhaust channel (11).

11. Combustion engine according to claim 10, wherein insulating fabric layers are wrapped around the first exhaust channel (11).

12. Combustion engine according to any of claims 6 to 11, wherein the combustion engine is a diesel engine.

## Revendications

1. Procédé de réduction de polluants dans un moteur à combustion interne, dans lequel des gaz d'échappement produits au moyen d'au moins un cylindre (1) du moteur à combustion interne avec au moins une première soupape d'échappement (5) et une deuxième soupape d'échappement (7), un deuxième canal de gaz d'échappement (19) associé à la deuxième soupape d'échappement (7) ne comportant pas de couche isolante, sont conduits à un système de post-traitement de gaz d'échappement (9), en fonction d'une condition prédéterminée, exclusivement au moyen de l'au moins une première soupape d'échappement (5) par l'intermédiaire d'un premier canal de gaz d'échappement (11) qui est associé à l'au moins une première soupape d'échappement (5) et qui comporte au moins en partie une couche thermiquement isolante (17) qui réduit un transfert de chaleur des gaz d'échappement respectifs vers un composant formant le canal de gaz d'échappement (11) ou un environnement du canal de gaz d'échappement (11), **caractérisé en ce que** la condition prédéterminée en fonction de laquelle les gaz d'échappement sont envoyés au système de post-traitement de gaz d'échappement (9) exclusivement au moyen de la première soupape d'échappement (5) par l'intermédiaire du premier canal de gaz d'échappement (11) est choisie en fonction d'une température de fluide de refroidissement du moteur à combustion interne.

2. Procédé selon la revendication 1, dans lequel, en fonction d'une autre condition prédéterminée, les gaz d'échappement produits par l'au moins un cylindre (1) sont évacués de l'au moins un cylindre (1) au moins en partie au moyen de la deuxième soupape d'échappement (7) par l'intermédiaire du deuxième canal de gaz d'échappement (19), dans lequel l'autre condition prédéterminée est choisie en fonction de valeurs de gaz d'échappement actuelles ou d'un intervalle de temps écoulé depuis un démarrage d'un moteur à combustion respectif.

3. Procédé selon l'une quelconque des revendications précédentes, dans lequel le premier canal de gaz d'échappement (11) fournit une liaison directe de l'au moins un cylindre (1) au système de post-traitement de gaz d'échappement (9) sous la forme d'une ligne droite.

4. Procédé selon l'une quelconque des revendications précédentes, dans lequel le premier canal de gaz d'échappement (11) comporte une surface réfléchissante sur son côté intérieur (15).

5. Procédé selon l'une quelconque des revendications précédentes, dans lequel le premier canal de gaz d'échappement (11) est revêtu avec un vernis ou un alliage ou poli sur son côté intérieur (15).

6. Moteur à combustion interne avec au moins un cylindre (1) avec au moins une première soupape d'échappement (5) et une deuxième soupape d'échappement (7), dans lequel un deuxième canal de gaz d'échappement (19) associé à la deuxième soupape d'échappement (7) ne comporte pas de couche isolante, et dans lequel le moteur à combustion interne est conçu pour conduire des gaz d'échappement devant être produits au moyen de l'au moins un cylindre (1) à un système de post-traitement de gaz d'échappement (9), en fonction d'une condition à prédéterminer, exclusivement au moyen de la première soupape d'échappement (5) par l'intermédiaire d'un premier canal de gaz d'échappement (11) qui est associé à la première soupape d'échappement (5) et qui comporte au moins en partie une couche thermiquement isolante (17) qui réduit un transfert de chaleur des gaz d'échappement respectifs vers un composant formant le premier canal de gaz d'échappement (11) ou un environnement du premier canal de gaz d'échappement (11), et dans lequel le moteur à combustion interne comprend un appareil de commande qui est conçu pour commander l'au moins une première soupape d'échappement (5) et la deuxième soupape d'échappement (7) de telle sorte que, en fonction de la condition à prédéterminer, seule l'au moins une première soupape d'échappement (5) est à ouvrir de telle sorte que des gaz d'échappement devant être produits par l'au moins un cylindre (1) sont conduits au système de post-traitement de gaz d'échappement (9) par l'intermédiaire du premier canal de gaz d'échappement (11) qui est associé à l'au moins une première soupape d'échappement (5) et qui comporte au moins en partie une couche thermiquement isolante (17), **caractérisé en ce que** la condition prédéterminée en fonction de laquelle les gaz d'échappement sont à envoyer au système de post-traitement de gaz d'échappement (9) exclusivement au moyen de la première soupape d'échappement (5) par l'intermédiaire du premier canal de gaz d'échappement (11) est choisie en fonction d'une température de fluide de refroidissement du moteur à combustion interne.

7. Moteur à combustion interne selon la revendication 6, dans lequel le moteur à combustion interne comprend au moins un premier turbocompresseur (13) et un deuxième turbocompresseur (21), et dans lequel l'appareil de commande est conçu pour commander l'au moins une première soupape d'échappement (5) de telle sorte que, pendant une phase de démarrage à froid du moteur à combustion interne, les gaz d'échappement devant être produits par l'au moins un cylindre (1) sont conduits exclusivement au premier turbocompresseur (13) et ensuite au système de post-traitement de gaz d'échappement (9) au moyen du premier canal de gaz d'échappement (11) associé à l'au moins une première soupape de gaz d'échappement (5).

8. Moteur à combustion interne selon la revendication 6 ou 7, dans lequel une couche thermiquement isolante (17) est appliquée sur la surface intérieure (15) du premier canal de gaz d'échappement (11).

9. Moteur à combustion interne selon la revendication 8, dans lequel la couche thermiquement isolante (17) est réalisée sous forme de couche d'émail.

10. Moteur à combustion interne selon la revendication 6 ou 7, dans lequel une couche thermiquement isolante (17) est appliquée sur une surface extérieure du premier canal de gaz d'échappement (11).

11. Moteur à combustion interne selon la revendication 10, dans lequel le premier canal de gaz d'échappement (11) est enveloppé de couches tissées isolantes.

12. Moteur à combustion interne selon l'une quelconque des revendications 6 à 11, dans lequel le moteur à combustion interne est un moteur diesel.
